# EUROPEAN PATENT APPLICATION

(11) **EP 2 437 438 A1**
(43) Date of publication of application: **04.04.2012**
(21) Application number: 10823058.2
(22) Date of filing: 09.10.2010
(51) Int. Cl.: H04L 12/28

(54) **METHOD, DEVICE AND SYSTEM FOR ROUTE WITHDRAWAL**

(30) Priority: 15.10.2009 CN 200910110795
(71) Applicant: Huawei Technologies Co., Ltd., Shenzhen, Guangdong 518129 (CN)
(72) Inventor: DONG, Jie, Shenzhen Guangdong 518129 (CN); CHEN, Guoyi, Shenzhen Guangdong 518129 (CN)
(74) Representative: Pfenning, Meinig & Partner GbR
(86) International application number: PCT/CN2010/077621
(87) International publication number: WO 2011/044828

(57) **Abstract**

The present invention relates to the field of communications and discloses a method, device, and system for withdrawing routes. When routes are withdrawn, by carrying route withdrawal related information in a route update message and withdrawing routes n according to the route withdrawal related information, a Border Gateway Protocol (BGP) path detection procedure is avoided and the time of network topology convergence is shortened. Further, by carrying identifiers information of routes to be withdrawn in the update message, specific routes can be withdrawn in a scenario where there are multiple BGP routes; by carrying characteristic information of routes to be withdrawn in batches in the update message, a group of routes with the common characteristic can be withdrawn in batches; and by carrying route withdrawal policy information in the update message, the collaboration between BGP peers may be optimized, and the quality and performance of the network may be improved.

## Description

This application claims priority to Chinese Patent Application No. 200910110795.0, filed with the Chinese Patent Office on October 15, 2009 and entitled "METHOD, DEVICE, AND SYSTEM FOR WITHDRAWING ROUTES", which is incorporated herein by reference in its entirety.

### FIELD OF THE INVENTION

The present invention relates to the field of communications, and in particular, to a method, device, and system for withdrawing routes.

### BACKGROUND OF THE INVENTION

The Border Gateway Protocol (BGP) is a protocol for discovering dynamical routes between Autonomous Systems (ASs). Its basic function is to automatically exchange loop-free routes information across ASs. Corresponding to protocols such as Open Shortest Path First (OSPF) and Route Information Protocol (RIP) which run within an AS, BGP is an Exterior Gateway Protocol (EGP), while OSPF and RIP are Interior Gateway Protocols (IGPs).

Routers where BGP connections are established are peers to each other. There are two types of connections between peers, Internal BGP (IBGP) and External BGP (EBGP). A BGP connection established within one AS is an IBGP connection. A BGP connection established between different ASs is an EBGP connection.

The BGP protocol uses an update message to advertise routes information. The update message carries a Withdrawn Routes attribute which carries the destination address prefix of the routes to be withdrawn. When a router receives the update message, the routes are withdrawn according to the destination address prefix of the routes to be withdrawn indicated in the Withdrawn Routes field.

The method for withdrawing routes according to the information carried in the Withdrawn Routes field in a prior art is subject to at least the following weaknesses:

There are multiple reachable routes between two ASs. According to the method of the prior art, when the public link of two routes fails, the router withdraws one of the routes according to the Withdrawn Routes field in the update message. After the route is withdrawn, the router may choose the other route that includes the failed link for routing and forwarding. In this case, BGP path detection is required to discover available routes and thus the speed of network topology convergence is impacted. In another scenario where a route reflector advertises multiple routes reaching the same destination address, since there are multiple routes for the same destination address, when routes are withdrawn, the router will fail to decide which routes to withdraw according to the destination address prefix in the Withdrawn Routes field in the update message.

### SUMMARY OF THE INVENTION

The objective of the embodiments of the present invention is to provide a method, device, and system for withdrawing routes to achieve technical effects of avoiding BGP path detection procedure and shortening the time of network topology convergence.

The objective of the embodiments of the present invention is achieved through the following technical solution:

A method for withdrawing routes, which includes:
receiving a route update message which carries route withdrawal related information , in which the route withdrawal related information includes a route withdrawal reason and/or route identifiers of routes to be withdrawn; and
withdrawing routes according to the route withdrawal related information.

A routing device, which includes:
a receiving module, configured to receive a route update message which carries route withdrawal related information, in which the route withdrawal related information includes a route withdrawal reason and/or route identifiers of routes to be withdrawn; and
a withdrawing module, configured to withdraw routes according to the route withdrawal related information carried in the route update message received by the receiving module.

A system for withdrawing routes, which includes a first routing device and a second routing device, where:
the first router, which has a BGP connection to the second router, is configured to send a route update message which carries route withdrawal related information, in which the route withdrawal related information includes a route withdrawal reason and/or route identifiers of routes to be withdrawn; and
the second routing device is configured to receive the route update message and withdraw routes according to the route withdrawal related information.

According to the technical solution of the present invention, a router sends an update message which carries the route withdrawal reason to indicate a failed link, and a router in AS 120 receives the update message and withdraws routes according to the route withdrawal reason, thus avoiding the BGP path detection procedure and achieving technical effects of shortening the time of network topology convergence. Further, by carrying identifier information of routes to be withdrawn in the update message, specific routes can be withdrawn in a scenario where there are multiple BGP routes; by carrying characteristic information of routes to be withdrawn in batches in the update message, a group of routes with the same characteristic can be withdrawn in batches; by carrying route withdrawal policy information in the update message, the collaboration between BGP peers may be optimized, and the quality and performance of the network may be improved.

### BRIEF DESCRIPTION OF THE DRAWINGS

FIG 1 is a schematic networking diagram in scenario 1 according to an embodiment of the present invention;
FIG 2 is a flowchart of a method for withdrawing routes according to an embodiment of the present invention;
FIG 3 is a schematic networking diagram in scenario 2 according to an embodiment of the present invention;
FIG 4 is a schematic networking diagram in scenario 3 according to an embodiment of the present invention; and
FIG 5 is a schematic diagram of a routing device according to an embodiment of the present invention.

### DETAILED DESCRIPTION OF THE EMBODIMENTS

To better explain the objective, technical solution, and benefits of the present invention, the embodiments of the present invention are described in detail with reference to the accompanying drawings. It should be understood, the embodiments herein are provided for explaining the present invention and not intended to limit the present invention.

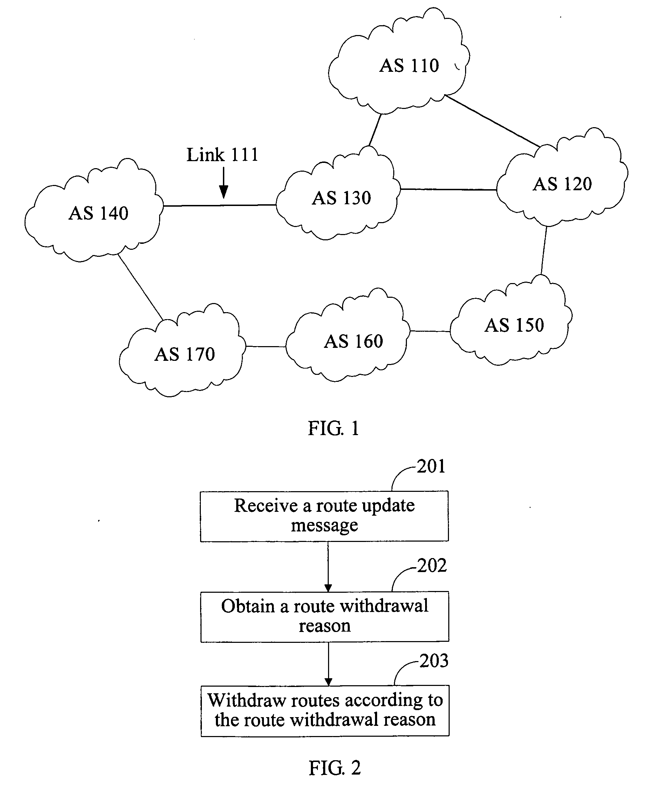

As shown in FIG 2, a method for withdrawing routes according to an embodiment of the present invention includes the following steps:
201. Receive a route update message.

Specifically, a router receives an update message for route withdrawal which carries route withdrawal related information. The route withdrawal related information includes at least one of the following items: withdrawal reason, identifiers of the routes to be withdrawn, common characteristic of the routes to be withdrawn, and route withdrawal policy.

The specific format of an update message is shown in Table 1.

**Table 1**

| |
|---|
| Withdrawn Routes Length (2 octets) |
| Withdrawn Routes (variable) |
| Total Path Attribute Length (2 octets) |
| Path Attributes (variable) |
| Network Layer Reachability Information (variable) |

where, Path Attributes include multiple Path Attributes.

In the embodiment of the present invention, a new Path Attribute can be defined to bear the route withdrawal related information. Specifically, a fixed field may be used in the new Path Attribute to bear the route withdrawal related information. For example, 16 fixed octets bear the route withdrawal reason, where the first 4 octets are used to carry the route withdrawal reason, the second 4 octets are used to carry the identifiers of the routes to be withdrawn, the third 4 octets are used to carry the common characteristic of the routes to be withdrawn, and the fourth 4 octets are used to carry the withdrawal policy. The Path Attribute may alternatively use the Type, Length, Value (TLV) format. Different TLV corresponds to different route withdrawal related information. For example, when Type is Ox01, the TLV indicates the route withdrawal reason; when Type is 0x02, the TLV indicates identifiers of the routes to be withdrawn; when Type is 0x03, the TLV indicates the common characteristic of the routes to be withdrawn; and when Type is 0x04, the TLV indicates the route withdrawal policy. The Path Attribute may include multiple TLVs to respectively correspond to different route withdrawal related information.

202. Obtain the route withdrawal related information and specifically, obtain the route withdrawal related information in the update message received in step 201.

203. Withdraw routes according to the route withdrawal related information.

In the foregoing embodiment of the present invention, the route withdrawal related information is carried in an update message and routes are withdrawn according to the route withdrawal related information, thus increasing the efficiency of route withdrawal. Further, because the update message carries the reason for route withdrawal, the BGP path detection procedure can be avoided; because the update message carries identifiers of the routes to be withdrawn, specific routes can be withdrawn in a scenario where there are multiple BGP routes; because the update message carries characteristic information of routes to be withdrawn in batches, a group of routes with the same characteristic can be withdrawn in batches; and because the update message carries the route withdrawal policy information, the collaboration between BGP peers can be optimized and the quality and performance of the network can be improved.

In the foregoing embodiment of the present invention, the route withdrawal related information includes at least one of the following items: route withdrawal reason, identifiers of the routes to be withdrawn, common characteristic of the routes to be withdrawn, and route withdrawal policy. Application scenarios where the update message carries different route withdrawal related information are described in detail hereafter.

### Application scenario 1:

FIG 1 is a schematic networking diagram according to an embodiment of the present invention. The network includes multiple ASs, AS 110, AS 120, AS 130, AS 140, AS 150, AS 160, and AS 170, where AS 130 and AS 140 are connected through link 111. There are three reachable routes from AS 120 to AS 140:
first route: AS 120-AS 130-AS 140;
second route: AS 120-AS 110-AS 130-AS 140; and
third route: AS 120-AS 150-AS 160-AS 170-AS 140.

According to the route selection rules of BGP, AS 120 selects the first route as the best route for packet forwarding.

When the link 111 fails, a router in AS 130 sends a route update message to a router in AS 120 to withdraw the first route. The update message carries the route withdrawal reason indicating the link 111 has failed.

In this scenario, step 201 may include the following substep:

The router in AS 120 receives the update message from AS 130. The update message is used to withdraw the first route and carries the route withdrawal reason indicating the link 111 has failed. Specifically, a new Path Attribute is defined to carry AS number (140) of AS 140 and the AS number (130) of AS 130 to indicate that the link 111 has failed.

In the scenario, step 202 may include obtaining the route withdrawal reason in the update message received in step 201.

In this scenario, step 203 may include:
marking the routes that include the failed link as invalid according to the route withdrawal reason in the update message and then withdrawing the first route; or
withdrawing the first route and then marking the routes that include the failed link as invalid according to the route withdrawal reason in the update message.

Because the second route includes the link 111, when AS 120 withdraws the first route, it is required to mark the second route as invalid, so that AS 120 selects the third route for packet forwarding, thus avoiding the BGP path detection procedure.

In this scenario, a router in AS 130 sends an update message to a router in AS 120. The update message carries a route withdrawal reason indicating a link has failed. The router in AS 120 receives the update message and withdraws a route according to the route withdrawal reason. This avoids the path detection procedure of BGP and achieves technical effects of shortening the time of network topology convergence.

### Application scenario 2:

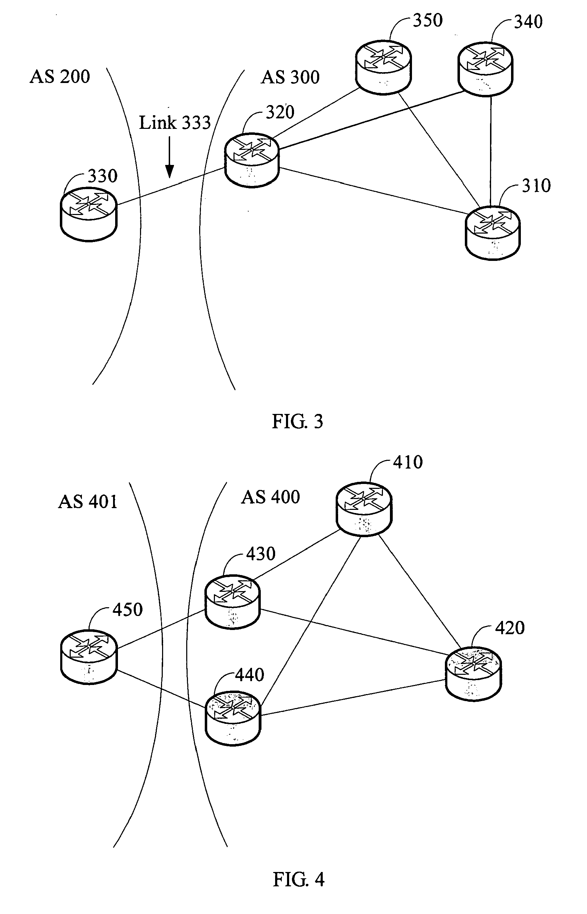

As shown in FIG 3, the network includes a router 310, a router 320, a router 330, a route reflector 340, and a route reflector 350. The router 320 and the router 310 are clients of the route reflector 340 and the route reflector 350. The router 310, the router 320, the route reflector 340, and the route reflector 350 are located in AS 300; the router 330 is located in AS 200; and the router 320 and the router 330 are connected through a link 333. In the scenario, when routes are advertised, the route reflector 340 and the route reflector 350 respectively advertise a best route reaching router 330 to the router 310, where:
the route reflector 340 advertises a first route reaching the router 330 to the router 310 and the BGP next hop of the route is the router 320;
the route reflector 350 advertises a second route reaching the router 330 to the router 310 and the BGP next hop of the route is the router 320;

The router 310 thus obtains two routes with the BGP next hop as router 320 and stores the two routes. Because the two routes come from different route reflectors, when routes are withdrawn, the first route can only be withdrawn through an update message sent by route reflector 340 to router 310 and the second route can only be withdrawn through an update message sent by route reflector 350 to router 310.

When the link 333 fails, the router 320 sends a route update message to the router reflector 340 and the route reflector 350 to withdraw the first route. The route update message carries the route withdrawal reason indicating the link 333 has failed. Specifically, a new Path Attribute is defined to carry the AS number (130) of AS 200 and the BGP identifier of the router 320 to indicate that the link 333 has failed.

In this scenario, actions of the router 310 are similar to the actions of the router in AS 120 in scenario 1 and are not further described here.

In the scenario, the routes advertised respectively by route reflector 340 and route reflector 350 to router 310 both include the link 333. Therefore, when router 310 withdraws the first route, it is required to mark the second route as invalid, so that the router 310 will not continue using the second route to forward packets.

In this scenario, the route reflector 350 sends a route update message to the router 310. The route update message carries a route withdrawal reason indicating a link has failed. The router 310 receives the route update message and withdraws a route according to the route update message. This avoids the path detection procedure of BGP and achieves technical effects of shortening the time of network topology convergence.

### Application scenario 3:

As shown in FIG 4, the network includes a route reflector 410, a router 420, a router 430, a router 440, and a router 450. The router 420, the router 430, and router 440 are clients of the route reflector 410. The route reflector 410, the router 420, the router 430, and the router 440 are located in AS 400, and the router 450 is located in AS 401. In the scenario of multiple routes advertising, the route reflector 410 advertises multiple routes reaching the router 450 to the router 420. The routes are a first route and a second route, where:
the BGP next hop of the first route is the router 430; and
the BGP next hop of the second route is the router 440.

When the router reflector 410 advertises the routes, an ORIGINATOR_ID attribute is carried to differentiate the multiple different routes reaching router 450. Specifically, the ORIGINATOR_ID attribute of the first route is set to a first value, and that of the second route is set to a second value. For example, the ORIGINATOR_ID attribute of the first route is set to the IP address of the router 430 or BGP identifier of the router 430, and the ORIGINATOR_ID attribute of the second route is set to the IP address of the router 440 or BGP identifier of the router 440.

Based on the above routes advertising, when the router 430 needs to withdraw the first route, the specific withdrawal process is as follows:

The router 430 sends a route update message to the route reflector 410 to withdraw the first route. The update message carries the ORIGINATOR_ID attribute of the route to be withdrawn, which indicates that the route to be withdrawn is the first route.

In this scenario, step 201 may include:
receiving the update message from the route reflector 410, where the update message is used to withdraw a route reaching the router 450 and carries the ORIGINATOR_ID attribute of the route to be withdrawn.

In this scenario, step 202 may include:
obtaining the ORIGINATOR_ID attribute of the route to be withdrawn in the update message received in step 201.

In this scenario, step 203 may include:
withdrawing the route indicated by the ORIGINATOR_ID attribute according to the ORIGINATOR_ID attribute obtained in step 202 and the route destination address carried in the Withdrawn Routes field, where the route destination is the router 450.

Because different route destinations may be related to the same ORIGINATOR_ID attribute, the ORIGINATOR_ID attribute and the route destination address must be both considered to decide that the route to be withdrawn is the first route.

In this scenario, the router 430 sends a route update message to the route reflector 410. The route update message carries the ORIGINATOR_ID attribute of the route to be withdrawn indicating that the specific route that needs to be withdrawn is the first route. The router 420 receives the route update message from the route reflector 410 and withdraws the first route according to the route update message. Thus, this achieves the technical effects that a specific route can be withdrawn in a scenario where there are multiple routes.

### Application scenario 4:

In this scenario, when it is required to withdraw multiple routes, the route update message may carry a common characteristic of the multiple routes to be withdrawn. The common characteristic may be described as: coming from the same peer, concluding the same ORIGINATOR_ID attribute, passing through the same AS path, having the same BGP next hop router, having the same AGGREGATOR attribute, or having the same MULTI_EXIT_DISC (MED) attribute, etc. By receiving the route update message and withdrawing the routes that have the above common characteristics according to the route update message, the technical effects are achieved that multiple routes are withdrawn in a single attempt.

### Application Scenario 5:

In this Scenario, when it is required to withdraw multiple routes, the route update message may carry a route withdrawal policy information. By receiving the route update message and withdrawing routes according to the policy information carried in the route update message, the flexibility of route withdrawal can be improved. For example, in a scenario of graceful shutdown, to withdraw a route, the route update message carries the route withdrawal policy information informing a peer to withdraw the route some time after receiving the route withdrawal message. During this time, the peer can perform BGP route convergence and select a new route. Because the route to be withdrawn is still available within the time, loss of packets can be avoided in the process of route convergence. In another scenario, when a route is withdrawn, the route update message carries the route withdrawal policy information informing the peer to set the route as a lowest priority route among all candidate routes so as to set the route as the last selected route.

In the above scenarios, the route withdrawal related information includes only one of the following types: route withdrawal reason, identifiers of the routes to be withdrawn, common characteristic of the routes to be withdrawn, and route withdrawal policy. In the embodiments of the present invention, the route withdrawal related information carried in an update message may include multiple types. For example, the update message can carry both the route withdrawal reason and the common characteristic of the routes to be withdrawn.

Accordingly, when a route is withdrawn, the actions corresponding to each type are respectively performed to withdraw routes. For example, when the update message carries both the route withdrawal reason and the common characteristic of the routes to be withdrawn, the actions described in scenario 1 and scenario 4 are respectively performed to withdraw routes.

In the above scenarios, when Border Gateway Protocol BGP connections are established, routers exchange capability negotiation information and determine whether they support the update message that carries route withdrawal related information. For example, a router in AS 130 exchanges capability negotiation information with a router in AS 120 and the router in AS 120 determines whether it supports the update message that carries route withdrawal related information.

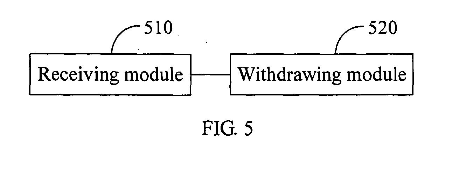

An embodiment of the present invention provides a routing device. As shown in FIG 5, the routing device includes:
a receiving module 510, configured to receive an route update message which carries route withdrawal related information, wherein the route withdrawal related information includes a route withdrawal reason and/or route identifiers of routes to be withdrawn; and
a withdrawing module 520, configured to withdraw routes according to the route withdrawal related information carried in the route update message received by the receiving module 510.

The withdrawing module 520 includes a first withdrawing unit and/or a second withdrawing unit. When the route withdrawal related information includes the route withdrawal reason, the first withdrawing unit is configured to mark routes that include the failed link as invalid according to the route withdrawal reason and withdraw the routes specified in the route update message, and the route withdrawal reason indicates the specific failed link. When the route withdrawal related information includes identifiers of the routes to be withdrawn, the second withdrawing unit is configured to withdraw the routes according to the identifiers of the routes to be withdrawn and a route destination address carried in the route update message, the identifiers of the routes to be withdrawn indicate the specific routes to be withdrawn.

In the embodiment of the present invention, the route withdrawal related information may further include a common characteristic of routes to be withdrawn and a route withdrawal policy. Accordingly, the withdrawing module 520 may further include a third withdrawing unit or a fourth withdrawing unit.

When the route withdrawal related information includes the common characteristic of routes to be withdrawn, the third withdrawing unit is configured to withdraw routes having the common characteristic, the common characteristic may include: the same peer, including the same ORIGINATOR_ID attribute, passing through the same AS path, having the same BGP next hop router, having the same AGGREGATOR attribute, and having the same MED (MULTI_EXIT_DISC) attribute. When the route withdrawal related information includes the route withdrawal policy, the fourth withdrawing unit is configured to withdraw a route according to the withdrawal policy, the withdrawal policy may inform the peer to withdraw the route some time after receiving the route withdrawal information, or inform the peer to set the route as the lowest priority route among candidate routes so that the route is set to be the last selected route.

In the embodiment of the present invention, the withdrawing module 520 may include at least one of the following units: the first withdrawing unit, the second withdrawing unit, the third withdrawing unit, and the fourth withdrawing unit.

The routing device further includes a capability negotiating module, configured to exchange capability negotiation information with a second routing device when a BGP connection is established, and determine whether itself supports the route update message that carries the route withdrawal related information.

A routing system according to an embodiment of the present invention includes a first routing device and a second routing device, where a BGP connection is established between the first routing device and the second routing device.

The first routing device is configured to send a route update message which carries route withdrawal related information, wherein the route withdrawal related information includes a route withdrawal reason and/or route identifiers of routes to be withdrawn.

The route withdrawal reason indicates a specific failed link and the identifiers of the routes to be withdrawn indicate the specific routes to be withdrawn.

The second routing device is configured to receive the route update message and withdraw routes according to the route withdrawal related information.

In the embodiment of the present invention, the route withdrawal related information may further include a common characteristic of routes to be withdrawn and a route withdrawal policy.

When a BGP connection is established between the first router and the second router, the first router may negotiate capabilities with the second router. Specifically, the first router exchanges capability negotiation information with the second router and determines whether the second router supports the route update message which carries route withdrawal related information.

Through the foregoing description of the embodiments of the present invention, those skilled in the art understand that the invention can be implemented through software in addition to a necessary universal hardware platform or through hardware. Based on such understanding, the technical solution of the embodiments of the present invention can be reflected in the form of a software product. The computer software product may be stored in a storage medium, such as a Read Only Memory (ROM)/a Random Access Memory (RAM), a magnetic disk, a Compact Disk, etc. and include a number of instructions that enable a computer device or a server or other network device to execute the method described in the embodiments or certain portions of the embodiments of the present invention.

The foregoing description is only some preferred embodiments of the present invention and is not intended to limit the scope of the present invention. It is apparent that those skilled in the art can make various modifications, variations, and improvements to the invention without departing from the spirit and scope of the present invention.

## Claims

1. A method for withdrawing routes, comprising:
receiving a route update message which carries route withdrawal related information, wherein the route withdrawal related information comprises a route withdrawal reason and/or route identifiers of routes to be withdrawn; and
withdrawing routes according to the route withdrawal related information.

2. The method of claim 1, wherein, when the route withdrawal related information comprises a route withdrawal reason, the step of withdrawing routes according to the route withdrawal related information comprises:
marking routes comprising a failed link as invalid according to the route withdrawal reason which indicates the specific failed link; and
withdrawing the routes specified in the route update message.

3. The method of claim 1 or 2, wherein, when the route withdrawal related information comprises route identifiers of routes to be withdrawn, the step of withdrawing routes according to the route withdrawal related information comprises:
withdrawing routes according to the route identifiers of routes to be withdrawn and a route destination address carried in the route update message, wherein the route identifiers of routes to be withdrawn indicate the specific routes to be withdrawn.

4. The method of claim 3, wherein the route withdrawal related information further comprises a common characteristic of routes to be withdrawn and/or a route withdrawal policy.

5. The method of claim 3, further comprising: exchanging capability negotiation information with a second router and determining whether itself supports the route update message when a Border Gateway Protocol (BGP) connection is established.

6. A routing device, comprising:
a receiving module, configured to receive a route update message which carries route withdrawal related information, wherein the route withdrawal related information comprises a route withdrawal reason and/or route identifiers of routes to be withdrawn; and
a withdrawing module, configured to withdraw routes according to the route withdrawal related information carried in the route update message received by the receiving module.

7. The routing device of claim 6, wherein the withdrawing module comprises a first withdrawing unit and/or a second withdrawing unit, wherein:
the first withdrawing unit is configured to mark routes comprising a failed link as invalid according to the route withdrawal reason and withdraw routes specified in the route update message, wherein the route withdrawal reason indicates the specific failed link; and the second withdrawing unit is configured to withdraw routes according to the route identifiers of routes to be withdrawn and a route destination address carried in the route update message, wherein the route identifiers of routes to be withdrawn indicate the specific routes to be withdrawn.

8. The routing device of claim 6 or 7, further comprising a capability negotiating module, configured to exchange capability negotiation information with a second routing device and determine whether the routing device supports the route update message when a Border Gateway Protocol (BGP) connection is established.

9. A system for withdrawing routes, comprising a first routing device and a second routing device, wherein:
the first routing device, which has a Border Gateway Protocol (BGP) connection to the second routing device, is configured to send a route update message which carries route withdrawal related information, wherein the route withdrawal related information includes a route withdrawal reason and/or route identifiers of routes to be withdrawn; and
the second routing device is configured to receive the route update message and withdraw routes according to the route withdrawal related information.

10. The system of claim 9, wherein, when a BGP connection is established between the first routing device and the second routing device, the first routing device exchanges capability negotiation information with the second routing device and determines whether the second routing device supports the route update message.
